(19) Europäisches Patentamt
European Patent Office
Office européen des brevets

(11) **EP 3 553 560 B1**

(12) **FASCICULE DE BREVET EUROPEEN**

(45) Date de publication et mention de la délivrance du brevet:
**11.11.2020 Bulletin 2020/46**

(51) Int Cl.:
*G01S 13/87* (2006.01)     *G01S 13/00* (2006.01)
*G01S 7/35* (2006.01)

(21) Numéro de dépôt: **19167767.3**

(22) Date de dépôt: **08.04.2019**

(54) **RADAR PASSIF À ANNULATION ANALOGIQUE DE LA COMPOSANTE STATIQUE**

PASSIVER RADAR MIT ANALOGER ANNULLIERUNG DER STATISCHEN KOMPONENTE

PASSIVE RADAR WITH ANALOGUE CANCELLATION OF THE STATIC COMPONENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.04.2018 FR 1853175**

(43) Date de publication de la demande:
**16.10.2019 Bulletin 2019/42**

(73) Titulaire: **Commissariat à l'Énergie Atomique et aux Énergies Alternatives
75015 Paris (FR)**

(72) Inventeur: **ROSSON, Patrick
38054 Grenoble Cedex 09 (FR)**

(74) Mandataire: **Brevalex
95, rue d'Amsterdam
75378 Paris Cedex 8 (FR)**

(56) Documents cités:
**US-A1- 2015 355 322**

• **BOLVARDI HASAN ET AL: "Dynamic Clutter Suppression and Multitarget Detection in a DVB-T-Based Passive Radar", IEEE TRANSACTIONS ON AEROSPACE AND ELECTRONIC SYSTEMS, IEEE SERVICE CENTER, PISCATAWAY, NJ, US, vol. 53, no. 4, 1 août 2017 (2017-08-01), pages 1812-1825, XP011658442, ISSN: 0018-9251, DOI: 10.1109/TAES.2017.2674138 [extrait le 2017-08-07]**
• **BERTHILLOT CLEMENT ET AL: "BEM Reference Signal Estimation for an Airborne Passive Radar Antenna Array", IEEE TRANSACTIONS ON AEROSPACE AND ELECTRONIC SYSTEMS, IEEE SERVICE CENTER, PISCATAWAY, NJ, US, vol. 53, no. 6, 1 décembre 2017 (2017-12-01), pages 2833-2845, XP011673987, ISSN: 0018-9251, DOI: 10.1109/TAES.2017.2716458 [extrait le 2017-12-05]**

**Description**

## DOMAINE TECHNIQUE

Le domaine de l'invention est celui des radars, dits passifs, qui utilisent des signaux émis par des émetteurs non coopératifs afin de détecter et localiser des cibles.

## ÉTAT DE LA TECHNIQUE ANTÉRIEURE

Un radar passif est un système de surveillance permettant la détection (et éventuellement la localisation ainsi que l'estimation de la vitesse et de l'orientation) de cibles mobiles. Mais à la différence d'un radar classique actif, un radar passif n'intègre pas d'émetteur radiofréquence pour éclairer ses cibles. Ce système est qualifié d'opportuniste dans la mesure où il profite de la présence d'émetteurs tiers non coopératifs déjà présents sur la zone à surveiller. Ces émetteurs sont par exemple des émetteurs de radiodiffusion, de télédiffusion ou de télécommunication dans un contexte extérieur, et par exemple des points d'accès Wi-Fi dans un contexte intérieur.

Le radar passif reçoit le signal émis « acheminé » depuis de multiples trajets : le trajet en ligne de visée (ou trajet direct), les trajets passant par des réflecteurs fixes (relief, végétation, bâtiments, etc.) et enfin les trajets éventuels dus à la présence de réflecteurs d'intérêt en déplacement (les cibles). Le signal reçu se décompose ainsi en une contribution statique liée à la propagation du signal émis au travers d'un canal de propagation multi-trajets (i.e. liée à la propagation du signal émis en ligne de visée et à la propagation d'échos du signal émis provenant des réflecteurs fixes) et une contribution dynamique liée à la propagation d'échos du signal émis provenant des cibles mobiles

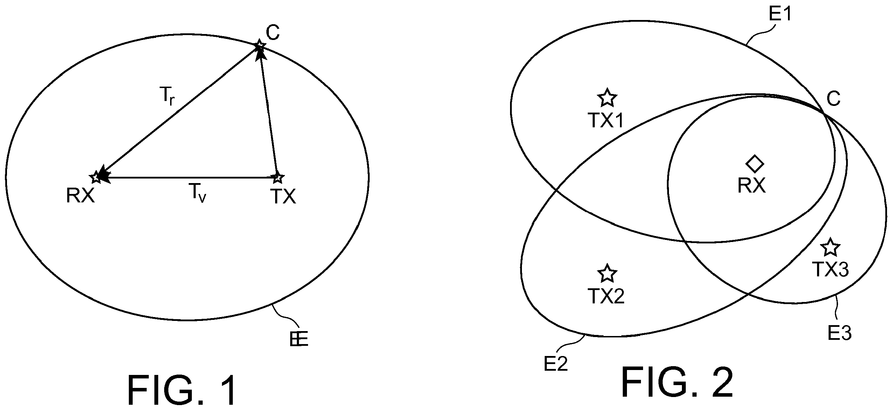

En référence à la figure 1, dans un scénario où il y a une seule cible C, la détermination de l'écart de temps entre le trajet en ligne de visée Tv et le trajet réfléchi Tr par la cible mobile C permet de restreindre la position de la cible à une ellipse E dont les foyers sont les positions de l'émetteur TX et du radar passif RX. Avec un réseau d'antennes au niveau du radar passif, il est possible de former un faisceau agile en rayonnement et de balayer la zone d'intérêt afin de trouver l'angle du signal réfléchi. L'information d'angle permet d'identifier le point de l'ellipse et donc la position de la cible. Cela suppose de connaître la position du radar passif, la position de l'émetteur non coopératif ainsi que le cap du faisceau agile dans le repère d'analyse.

Dans ce même scénario mono-cible, et en référence à la figure 2, l'usage de plusieurs émetteurs non-coopératifs TX1, TX2, TX3 permet de se passer d'antenne agile en rayonnement. La position recherchée de la cible C correspond effectivement à l'intersection d'ellipses El, E2, E3 dont les foyers sont d'une part la position du radar passif RX et d'autre part les positions des différents émetteurs non coopératifs TX1, TX2, TX3.

La présence de l'émission, puissante et continue, en ligne de visée mais également de ses échos provenant des réflecteurs fixes constitue l'une des difficultés majeures limitant le pouvoir de détection du radar. Les cibles ayant en général une surface équivalente radar (SER) réduite, la contribution dynamique présente en effet une amplitude très faible devant celles de la contribution statique. Or les différents récepteurs associés à chacune des antennes doivent s'asservir sur le signal le plus fort sans saturer les chaînes de réception.

Pour compenser cet écart de puissance, il est possible de filtrer spatialement les signaux grâce au réseau d'antennes puis d'appliquer de lourds traitements numériques reposant sur le principe d'intégration pour faire ressortir la contribution dynamique du signal reçu.

H. Bolvardi, M. Derakhtian et A. Sheikhi, "Dynamic Clutter Suppression and Multitarget Détection in a DVB-T-Based Passive Radar," IEEE Transactions on Aerospace and Electronic Systems, vol. 53, no. 4, pp. 1812-1825, décrit quant à lui une technique consistant à estimer la contribution statique et à procéder à une suppression de cette contribution statique dans le domaine numérique.

## EXPOSÉ DE L'INVENTION

L'invention a pour objectif de proposer une technique à même de faciliter l'étape de recherche de la cible. Elle propose pour cela un radar passif qui comprend une antenne de réception d'un signal émis par un émetteur non coopératif qui comprend des séquences connues du radar passif. Le signal reçu comprend une contribution statique liée à la propagation du signal émis au travers d'un canal de propagation multi-trajets et une contribution dynamique liée à la propagation d'échos du signal émis provenant d'une cible mobile. Le radar passif comporte une chaîne de réception qui comprend un convertisseur analogique-numérique apte à fournir un signal numérisé, une unité de détection de cible mobile à partir du signal numérisé, et une unité de traitement du signal numérisé configurée pour déterminer, lors d'une phase de calibration du radar passif, une estimation de la contribution statique. L'unité de traitement est plus particulièrement configurée, lors de la phase de calibration du radar passif, pour réaliser une synchronisation du signal reçu avec le signal émis à partir des séquences connues et pour déterminer une estimation du canal de propagation multi-trajets à partir du signal reçu synchronisé et des séquences connues.

Le radar passif est en outre doté d'une chaîne d'émission apte à délivrer un signal analogique représentatif de l'estimation de la contribution statique, et d'un coupleur configuré pour fournir à la chaîne de réception le signal reçu lors de la phase de calibration du radar passif, et le signal reçu auquel est soustrait le signal analogique représentatif de l'estimation de la contribution statique lors d'une phase d'utilisation du radar passif pour la détection de cible mobile.

L'invention propose également un procédé correspondant de détection d'une cible mobile au moyen d'un tel radar passif.

Certains aspects préférés mais non limitatifs de ce radar passif sont les suivants :

- la chaîne d'émission est configurée pour délivrer le signal analogique représentatif de l'estimation de la contribution statique durant la réception des séquences connues et dans lequel l'unité de détection de cible mobile exploite, lors de la phase d'utilisation du radar passif, le signal numérisé durant la réception des séquences connues ;
- le signal reçu depuis l'émetteur est un signal OFDM ;
- le coupleur est un coupleur directif ;
- l'antenne de réception est une antenne directive à balayage ;
- l'antenne de réception reçoit des signaux émis par une pluralité d'émetteurs non coopératifs, potentiellement dans différentes bandes de fréquence ;
- il comprend une pluralité d'antennes de réception chacune associée à une chaîne de réception, une unité de traitement du signal numérisé, une chaîne d'émission et un coupleur.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

- la figure 1 illustre une ellipse sur laquelle est restreinte la position de la cible du fait de l'écart de temps entre le trajet en ligne de visée et le trajet réfléchie par une cible ;
- la figure 2 représente la localisation d'une cible par l'intersection de trois ellipses ;
- la figure 3 est un schéma représentant un émetteur et un radar passif conforme à l'invention ;
- les figures 4 et 5 illustrent respectivement la phase de calibration et la phase d'utilisation du radar passif de l'invention.

## EXPOSÉ DÉTAILLÉ DE MODES DE RÉALISATION PARTICULIERS

Le radar passif de l'invention est un système opportuniste profitant de la présence d'émetteurs tiers non coopératifs déjà présents sur la zone à surveiller. Ce radar passif vise à détecter et à déterminer la localisation (voire l'orientation) d'objets en mouvement grâce aux signaux émis par un ou plusieurs émetteurs non coopératifs dont la localisation relative au radar est connue, tels que des émetteurs de réseaux de télécommunications cellulaires comme par exemple des réseaux 4G.

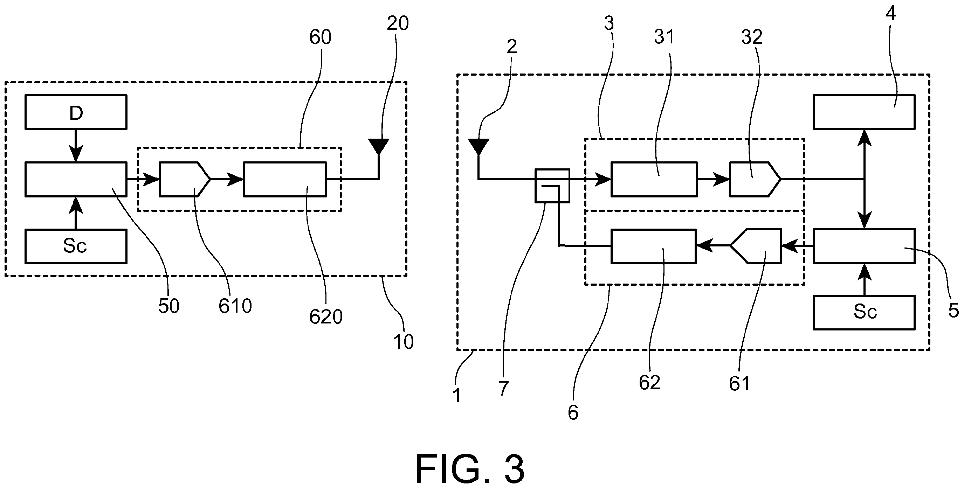

On a représenté sur la figure 3 un radar passif 1 conforme à l'invention qui exploite un signal émis par un émetteur non coopératif 10. L'émetteur 10 comprend un générateur numérique 50 de trames de données dans lesquelles on retrouve un préambule Sc et des données utiles D, une chaîne d'émission 60 qui comprend un convertisseur numérique-analogique 610 et un émetteur radiofréquence 620 qui transpose, filtre et amplifie le signal analogique à la fréquence désirée et une antenne d'émission 20.

Le radar passif 1 comprend de manière correspondante une antenne de réception 2 du signal émis par l'émetteur 10 et une chaîne de réception 3 qui comprend un récepteur radiofréquence 31 qui amplifie, filtre et transpose le signal reçu et un convertisseur analogique-numérique 32 qui fournit un signal numérisé. Ce signal numérisé est fourni à une unité de détection de cible mobile 4 qui met en œuvre un algorithme de radar passif conventionnel, par exemple en venant rechercher le couple délai - fréquence Doppler le plus vraisemblable. Un exemple d'un tel algorithme dans le cas où l'antenne de réception 2 est un réseau d'antennes est présenté dans l'article de C. R. Berger et al., "Signal processing for passive radar using OFDM waveforms," J. Sel. Topics Signal Process., pp. 226-238, 2010.

Le canal de propagation entre l'émetteur 10 et le radar passif 1 peut être constitué d'un trajet direct et de multi-trajet et, le cas échéant, d'une réflexion sur une cible d'intérêt. Ainsi, le signal reçu comprend une contribution statique liée à la propagation du signal émis au travers d'un canal de propagation multi-trajets (i.e. liée à la propagation du signal émis en ligne de visée et à la propagation d'échos du signal émis provenant des réflecteurs fixes) et, le cas échéant, une contribution dynamique liée à la propagation d'échos du signal émis provenant d'une ou plusieurs cibles mobiles.

Le radar passif 1 selon l'invention comporte en outre une unité 5 de traitement du signal numérisé configurée pour déterminer, lors d'une phase de calibration du radar passif, une estimation de la contribution statique. Il est en outre équipé d'une chaîne d'émission 6, synchronisée sur la même base temps-fréquence que la chaîne de réception 3 (même horloge numérique et même oscillateur local) et apte à délivrer un signal analogique représentatif de l'estimation de la contribution statique. Le radar passif 1 comprend également un coupleur 7 configuré pour fournir à la chaîne de réception 3 :

    ◦ le signal reçu lors de la phase de calibration du radar passif,
    ◦ le signal reçu auquel est soustrait le signal analogique représentatif de l'estimation de la contribution statique lors d'une phase d'utilisation du radar passif pour la détection de cibles mobiles.

Le radar passif réalise ainsi une annulation analogique de la contribution statique en venant générer un signal qui correspond, en sortie du coupleur directif, aux signaux reçus en l'absence de cibles mobiles. De telle manière, l'écart de puissance entre la contribution statique et la contribution dynamique est réduite (de l'ordre de 30 à 40 dB), ce qui permet de gagner en dynamique de codage (et donc en précision lors de la quantification des signaux analogiques) et de réduire la complexité du filtrage mis en œuvre dans l'unité de détection de cible mobile 4.

Le coupleur 7 est de préférence un coupleur directif de manière à éviter que le signal analogique représentatif de l'estimation de la contribution statique qui est soustrait au signal reçu ne reparte vers l'antenne 2. Le coupleur directif vient ainsi injecter de manière directionnelle le signal analogique représentatif de l'estimation de la contribution statique vers la chaîne de réception, avec par exemple des pertes de 10dB sur ce signal en direction de la chaîne de réception et des pertes de 30dB sur ce signal en direction de l'antenne.

Dans un mode de réalisation possible, un circulateur peut être inséré entre l'antenne 2 et le coupleur 7 afin de diminuer la puissance du signal analogique représentatif de l'estimation de la contribution statique susceptible d'être reçu par l'antenne. Le circulateur comprend un port 1 connecté à l'antenne, un port 2 connecté au coupleur et un port 3 connecté à une charge adaptée pour neutraliser l'énergie du signal analogique représentatif de l'estimation de la contribution statique qui repart vers l'antenne.

Dans l'invention, le signal émis par l'émetteur non coopératif 10 comprend des séquences connues du radar passif (sur une durée temporelle et une bande fréquentielle), par exemple les préambules Sc. Il s'agit par exemple d'un signal large bande multi-porteuse, par exemple un signal OFDM émis par une station de base d'un réseau de télécommunications LTE 4G ou par un point d'accès Wi-Fi. Il peut également s'agir d'un signal à bande étroite modulé mono-porteuse.

L'unité de traitement du signal numérisé 5 est alors configurée, lors de la phase de calibration du radar passif, pour réaliser une synchronisation temps-fréquence du signal reçu avec le signal émis à partir des séquences connues et pour déterminer une estimation du canal de propagation multi-trajets à partir du signal reçu synchronisé et des séquences connues. Avec la connaissance des séquences connues et l'estimation du canal de propagation multi-trajets, l'unité 5 peut générer une estimation numérique de la contribution statique durant la réception des séquences connues.

Cette estimation numérique est fournie à la chaîne d'émission 6 qui va alors délivrer le signal analogique représentatif de l'estimation de la contribution statique durant la réception des séquences connues. Le coupleur 7 vient soustraire ce signal analogique au signal reçu, le résultat de la soustraction étant numérisé par le convertisseur 32. L'unité de détection de cible mobile 4 exploite quant à elle, lors de la phase d'utilisation du radar passif, le signal numérisé durant la réception des séquences connues (i.e. sur la durée des séquences connues).

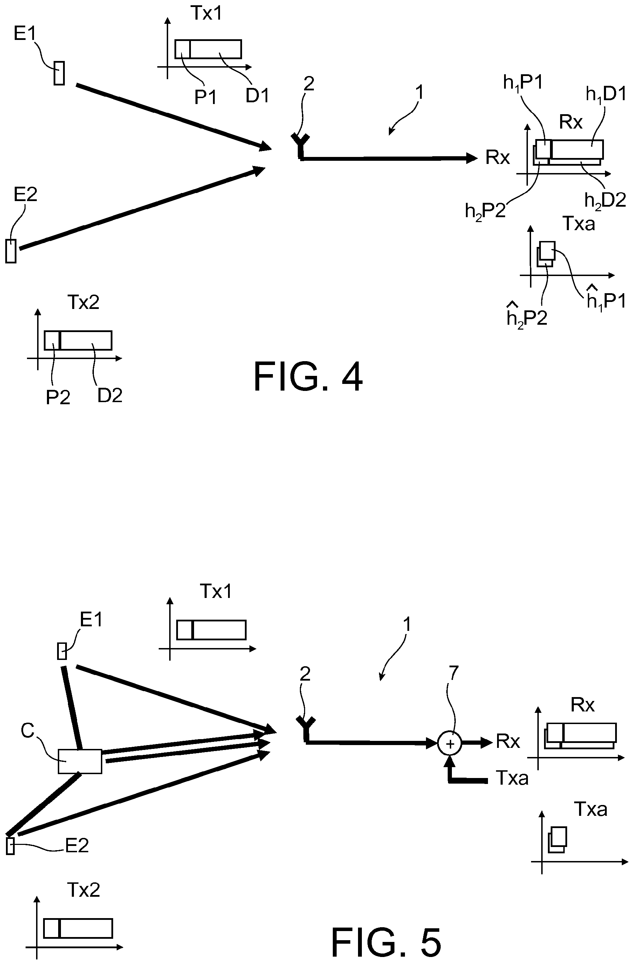

La figure 4 illustre la phase de calibration du radar passif de l'invention. Dans cet exemple, le radar 1 reçoit les signaux Txl, Tx2 émis par deux émetteurs non coopératifs El, E2 sous la forme de trames constituées respectivement d'un préambule P1, P2 et de données utiles D1, D2.

Le signal reçu est désigné par Rx. Le canal de propagation multi-trajets entre l'émetteur E1 et le radar passif 1 présente une réponse impulsionnelle hl et le canal de propagation multi-trajets entre l'émetteur E2 et le radar passif 2 présente une réponse impulsionnelle h2. Le radar passif 1 vient estimer chacun des canaux de propagation multi-trajets pour fournir des réponses impulsionnelles estimées $\widehat{h1}, \widehat{h2}$ (dans sa base temps-fréquence) et générer l'estimation numérique de la contribution statique Txa durant la réception des préambules avec la connaissance des préambules P1, P2 et l'estimation de chacun des canaux de propagation multi-trajets.

Dans une réalisation possible, les émetteurs E1 et E2 utilisent des bandes de fréquence différentes (par exemple des bandes attribuées à différents opérateurs réseaux de télécommunications cellulaires) et le radar passif peut commuter entre ces bandes de fréquence pour écouter un seul émetteur à la fois.

Afin d'estimer chacun des canaux de propagation multi-trajets, le radar passif effectue au préalable une synchronisation, notamment une synchronisation temps fréquence dans sa base de temps et de fréquence, du signal reçu avec le signal émis par chaque émetteur. Il exploite pour cela les préambules contenus dans les trames émises par chaque émetteur. Cette synchronisation porte sur une synchronisation en temps TO (« Timing Offset ») réalisée sur le trajet direct (le plus fort, et le premier arrivé), une synchronisation en fréquence CFO (« Carrier Frequency Offset ») pour compenser le décalage Doppler entre les signaux analogiques au niveau de l'émetteur radiofréquence 620 et le récepteur radiofréquence 31 et une synchronisation du rythme SFO (« Sampling Frequency Offset ») pour compenser le décalage de rythme entre les signaux numériques en entrée du convertisseur numérique-analogique 610 et en sortie du convertisseur analogique-numérique 32. Un exemple d'une telle synchronisation est donnée dans l'article de M. Morelli et al., "Synchronization techniques for orthogonal frequency division multiple access (OFDMA): A tutorial review", Proc. IEEE, vol. 95, no. 7, pp. 1394-1427, Juillet 2007.

Une fois cette synchronisation réalisée, le radar passif vient estimer, pour chaque émetteur, le canal de propagation correspondant. Différentes techniques d'estimation peuvent être mises en œuvre et on pourra en trouver des exemples dans l'article de M. K. Ozdemir et al., "Channel estimation for wireless OFDM systems," IEEE Communications Surveys & Tutorials, vol. 9, no. 2, pp. 18-48, Second Quarter 2007. Les réponses impulsionnelles estimées $\widehat{h1}$, $\widehat{h2}$ peuvent faire l'objet d'un ajustement en fonction de l'erreur observée entre les séquences effectivement reçues h1P1, h2P2 et leurs estimations $\widehat{h1P1}$, $\widehat{h2P2}$.

La figure 5 illustre la phase d'utilisation du radar passif de l'invention pour la détection de cibles C. La chaîne d'émission 6 du radar passif génère le signal analogique représentatif de l'estimation de la contribution statique durant la réception des séquences connues et le coupleur 7 vient soustraire ce signal analogique au signal reçu via l'antenne de réception 2.

Dans le cas d'un seul émetteur, le signal reçu après conversion analogique-numérique par un radar passif conventionnel exprimé dans le domaine fréquentiel s'écrit de la façon suivante : Sr = Pr. Tx. P. Rx, où Pr est le préambule, Tx est le gabarit de l'émetteur 610, P est le canal de propagation et Rx est le gabarit du récepteur 31. Avec H qui intègre l'aspect canal de propagation multi-trajet ainsi que les gains et défauts de l'émetteur 620 et du récepteur 31, on a Sr = Pr. H.

En supposant une parfaite synchronisation temps fréquence, la chaîne de réception du radar passif selon l'invention voit pour signal reçu lors de la phase d'utilisation le signal Sr = Pr.H - Pr.$\hat{H}$. Txa..C7.Rx = Pr.[H - Txa.$\hat{H}$. C7.Rx], où Txa est le gabarit de l'émetteur 62 du radar, $\hat{H}$ est l'estimation du canal et C7 représente les pertes induites par le coupleur 7. Le produit Txa.C7.Rx peut être estimé lors d'une calibration préliminaire ou de façon adaptative. On peut ainsi s'affranchir des gains et défauts de l'émetteur 62 et du récepteur 31 et des pertes du coupleur directif C7 en ayant

$$\widehat{H} = \frac{H}{Txa.C7.Rx},$$ ce qui permet effectivement de réduire la puissance du signal reçu.

Le radar passif selon l'invention comporte de préférence une seule antenne de réception 2, et par conséquent une seule chaîne de réception. Cette unique antenne de réception peut être une antenne directive à balayage au moyen de laquelle il est possible de balayer la zone d'intérêt et d'identifier la position de la cible sur l'ellipse. Alternativement, l'unique antenne peut être utilisée pour recevoir des signaux émis par une pluralité d'émetteurs non coopératifs. La position de la cible peut alors être déterminée à l'intersection des ellipses associées à chacun des émetteurs.

Le radar passif selon l'invention peut également comporter une pluralité d'antennes de réception chacune associée à une chaîne de réception 3, une unité de traitement du signal numérisé 5, une chaîne d'émission 6 et un coupleur 7. En d'autres termes, la génération et la soustraction d'un signal analogique d'annulation de la composante statique est réalisée pour chacune des antennes. Dans le contexte multi-antennes, les horloges numériques (basées sur une seule référence) et les oscillateurs locaux sont distribuées à toutes les chaînes de réception et d'émission.

L'invention porte également sur un procédé de détection d'une cible mobile au moyen du radar passif selon l'invention. Ce procédé comporte les étapes consistant à :

- lors d'une phase de calibration du radar passif, réaliser une synchronisation du signal reçu avec le signal émis à partir des séquences connues, déterminer une estimation du canal de propagation multitrajets à partir du signal reçu synchronisé et des séquences connues et générer une estimation de la contribution statique,
- former un signal analogique représentatif de l'estimation de la contribution statique, et
- fournir à la chaîne de réception le signal reçu lors de la phase de calibration du radar passif, et le signal reçu auquel est soustrait le signal analogique représentatif de l'estimation de la contribution statique lors d'une phase d'utilisation du radar passif pour la détection de la cible mobile.

**Revendications**

1. Radar passif (1) comprenant :

   - une antenne de réception (2) d'un signal comprenant des séquences connues du radar passif qui est émis par un émetteur non coopératif (10), le signal reçu comprenant une contribution statique liée à la propagation du signal émis au travers d'un canal de propagation multi-trajets et une contribution dynamique liée à la propagation d'échos du signal émis provenant d'une cible mobile (C),
   - une chaîne de réception (3) qui comprend un convertisseur analogique-numérique (32) apte à fournir un signal numérisé,
   - une unité de détection de cible mobile (4) à partir du signal numérisé,

   le radar passif étant **caractérisé en ce qu'**il comporte en outre :

   - une unité de traitement du signal numérisé (5) configurée pour, lors d'une phase de calibration du radar passif, réaliser une synchronisation du signal reçu avec le signal émis à partir des séquences connues, pour déterminer une estimation du canal de propagation multi-trajets à partir du signal reçu synchronisé et des séquences connues et générer une estimation de la contribution statique,
   - une chaîne d'émission (6) apte à délivrer un signal analogique représentatif de l'estimation de la contribution statique, et

- un coupleur (7) configuré pour fournir à la chaîne de réception :

  ◦ le signal reçu lors de la phase de calibration du radar passif,
  ◦ le signal reçu auquel est soustrait le signal analogique représentatif de l'estimation de la contribution statique lors d'une phase d'utilisation du radar passif pour la détection d'une cible mobile.

2. Radar passif selon la revendication 1, dans lequel la chaîne d'émission (6) est configurée pour délivrer le signal analogique représentatif de l'estimation de la contribution statique durant la réception des séquences connues et dans lequel l'unité de détection de cible mobile (4) exploite, lors de la phase d'utilisation du radar passif, le signal numérisé durant la réception des séquences connues.

3. Radar passif selon l'une des revendications 1 et 2, dans lequel le signal reçu depuis l'émetteur est un signal OFDM.

4. Radar passif selon l'une des revendications 1 à 3, dans lequel le coupleur (7) est un coupleur directif.

5. Radar passif selon l'une des revendications 1 à 3, dans lequel un circulateur est inséré entre l'antenne de réception (2) et le coupleur (7) pour diminuer la puissance du signal analogique représentatif de l'estimation de la contribution statique susceptible d'être reçu par l'antenne de réception.

6. Radar passif selon l'une des revendications 1 à 5, dans lequel l'antenne de réception (2) est une antenne directive à balayage.

7. Radar passif selon l'une des revendications 1 à 5, dans lequel l'antenne de réception (2) reçoit des signaux émis par une pluralité d'émetteurs non coopératifs (E1, E2).

8. Radar passif selon la revendication 7, dans lequel l'antenne de réception (2) reçoit les signaux émis par la pluralité d'émetteurs non coopératifs (E1, E2) dans différentes bandes de fréquence.

9. Radar passif selon l'une des revendications 1 à 5, comprenant une pluralité d'antennes de réception (2) chacune associée à une chaîne de réception (3), une unité de traitement du signal numérisé (5), une chaîne d'émission (6) et un coupleur (7).

10. Procédé de détection d'une cible mobile au moyen d'un radar passif comprenant :

    - une antenne de réception (2) d'un signal comprenant des séquences connues du radar passif qui est émis par un émetteur non coopératif (10), le signal reçu comprenant une contribution statique liée à la propagation du signal émis au travers d'un canal de propagation multi-trajets et une contribution dynamique liée à la propagation d'échos du signal émis provenant de la cible mobile,
    - une chaîne de réception (3) qui comprend un convertisseur analogique-numérique (32) apte à fournir un signal numérisé,
    - une unité de détection de cible mobile (4) à partir du signal numérisé,

le procédé étant **caractérisé en ce qu'**il comporte les étapes consistant :

    - lors d'une phase de calibration du radar passif, à réaliser une synchronisation du signal reçu avec le signal émis à partir des séquences connues, à déterminer une estimation du canal de propagation multi-trajets à partir du signal reçu synchronisé et des séquences connues et à générer une estimation de la contribution statique,
    - à former un signal analogique représentatif de l'estimation de la contribution statique, et
    - à fournir à la chaîne de réception :

      ◦ le signal reçu lors de la phase de calibration du radar passif,
      ◦ le signal reçu auquel est soustrait le signal analogique représentatif de l'estimation de la contribution statique lors d'une phase d'utilisation du radar passif pour la détection de la cible mobile.

**Patentansprüche**

1. Passives Radar (1), enthaltend:

    - eine Empfangsantenne (2) zum Empfangen eines Signals mit dem passiven Radar bekannten Sequenzen, das von einem nicht-kooperativen Sender (10) gesendet wird, wobei das empfangene Signal einen statischen Beitrag in Bezug auf die Ausbreitung des gesendeten Signals durch einen Mehrwegeausbreitungskanal und einen dynamischen Beitrag in Bezug auf die Ausbreitung von Echos des gesendeten Signals von einem beweglichen Ziel (C) umfasst,
    - eine Empfangskette (3), die einen Analog-Digital-Wandler (32) umfasst, der in der Lage ist, ein digitalisiertes Signal bereitzustellen,
    - eine Erkennungseinheit (4) zum Erkennen von beweglichen Zielen aus dem digitalisierten Signal,

wobei das passive Radar **dadurch gekennzeichnet ist, dass** es ferner enthält:

- eine Verarbeitungseinheit (5) zum Verarbeiten des digitalisierten Signals, die dazu ausgelegt ist, während einer Kalibrierungsphase des passiven Radars eine Synchronisierung des empfangenen Signals mit dem gesendeten Signal aus den bekannten Sequenzen durchzuführen, um eine Schätzung des Mehrwegeausbreitungskanals aus dem synchronisierten empfangenen Signal und den bekannten Sequenzen zu bestimmen und eine Schätzung des statischen Beitrags zu erzeugen,

- eine Sendekette (6), die in der Lage ist, ein analoges Signal zu liefern, das repräsentativ für die Schätzung des statischen Beitrags ist, und

- einen Koppler (7), der dazu ausgelegt ist, der Empfangskette bereitzustellen:

   ◦ das während der Kalibrierungsphase des passiven Radars empfangene Signal,
   ◦ das empfangene Signal abzüglich des analogen Signals, das repräsentativ ist für die Schätzung des statischen Beitrags während einer Phase der Nutzung des passiven Radars zur Erkennung eines beweglichen Ziels.

2. Passives Radar nach Anspruch 1,
wobei die Sendekette (6) dazu ausgelegt ist, das analoge Signal zu liefern, das für die Schätzung des statischen Beitrags während des Empfangs der bekannten Sequenzen repräsentativ ist, und wobei die Erkennungseinheit (4) zum Erkennen beweglicher Ziele während der Nutzungsphase des passiven Radars das digitalisierte Signal während des Empfangs der bekannten Sequenzen auswertet.

3. Passives Radar nach einem der Ansprüche 1 und 2,
wobei das vom Sender empfangene Signal ein OFDM-Signal ist.

4. Passives Radar nach einem der Ansprüche 1 bis 3,
wobei der Koppler (7) ein Richtkoppler ist.

5. Passives Radar nach einem der Ansprüche 1 bis 3,
wobei ein Zirkulator zwischen der Empfangsantenne (2) und dem Koppler (7) eingefügt ist, um die Leistung des analogen Signals zu verringern, das für die Schätzung des statischen Beitrags repräsentativ ist und von der Empfangsantenne empfangen werden kann.

6. Passives Radar nach einem der Ansprüche 1 bis 5,
wobei die Empfangsantenne (2) eine Abtast-Richtantenne ist.

7. Passives Radar nach einem der Ansprüche 1 bis 5,
wobei die Empfangsantenne (2) Signale empfängt, die von einer Mehrzahl von nicht-kooperativen Sendern (E1, E2) gesendet werden.

8. Passives Radar nach Anspruch 7,
wobei die Empfangsantenne (2) Signale empfängt, die von der Mehrzahl von nicht-kooperativen Sendern (E1, E2) in verschiedenen Frequenzbändern gesendet werden.

9. Passives Radar nach einem der Ansprüche 1 bis 5,
enthaltend eine Mehrzahl von Empfangsantennen (2), denen jeweils eine Empfangskette (3), eine Verarbeitungseinheit (5) zum Verarbeiten des digitalisierten Signals, eine Sendekette (6) und ein Koppler (7) zugeordnet sind.

10. Verfahren zur Erfassung eines beweglichen Ziels mit Hilfe eines passiven Radars, umfassend:

- eine Empfangsantenne (2) zum Empfangen eines Signals mit dem passiven Radar bekannten Sequenzen, das von einem nicht-kooperativen Sender (10) gesendet wird, wobei das empfangene Signal einen statischen Beitrag in Bezug auf die Ausbreitung des gesendeten Signals durch einen Mehrwegeausbreitungskanal und einen dynamischen Beitrag in Bezug auf die Ausbreitung von Echos des gesendeten Signals von dem beweglichen Ziel umfasst,

- eine Empfangskette (3), die einen Analog-Digital-Wandler (32) enthält, der in der Lage ist, ein digitalisiertes Signal bereitzustellen,

- eine Erkennungseinheit (4) zum Erkennen von beweglichen Ziele aus dem digitalisierten Signal,

wobei das Verfahren **dadurch gekennzeichnet ist, dass** es die folgenden Schritte umfasst:

- während einer Kalibrierungsphase des passiven Radars Durchführen einer Synchronisierung des empfangenen Signals mit dem gesendeten Signal ausgehend von den bekannten Sequenzen, Bestimmen einer Schätzung des Mehrwegeausbreitungskanals ausgehend von dem synchronisierten empfangenen Signal und den bekannten Sequenzen, und Erzeugen einer Schätzung des statischen Beitrags,

- Bilden eines analoges Signals, das repräsentativ für die Schätzung des statischen Beitrags ist, und

- Bereitstellen für die Empfängerkette von:

   ◦ dem während der Kalibrierungsphase des passiven Radars empfangenen Signal,

∘ dem empfangenen Signal abzüglich des analogen Signals, das repräsentativ für die Schätzung des statischen Beitrags während einer Phase der Nutzung des passiven Radars zur Erkennung des beweglichen Ziels ist.

**Claims**

1. A passive radar (1) comprising:

   - a reception antenna (2) configured to receive a signal comprising sequences known by the passive radar transmitted by a non-cooperative transmitter (10), the received signal comprising a static contribution related to the propagation of the transmitted signal through a multi-path propagation channel and a dynamic contribution related to the propagation of echoes of the transmitted signal coming from a moving target (C),
   - a reception chain (3) that includes a digital-analogue converter (32) configured to output a digitised signal,
   - a moving target detection unit (4) making use of the digitised signal,

   **characterized in that** the passive radar further comprises:

   - a digitised signal processing unit (5) configured, during a calibration phase of the passive radar, to synchronise the received signal with the transmitted signal using the known sequences, to determine an estimation of the multi-path propagation channel from the synchronized received signal and the known sequences and generate an estimation of the static contribution,
   - a transmission chain (6) configured to output an analogue signal representative of the estimation of the static contribution, and
   - a coupler (7) configured to supply to the reception chain:

     ∘ the received signal during the calibration phase of the passive radar,
     ∘ the received signal from which the analogue signal representative of the estimation of the static contribution is subtracted during a usage phase of the passive radar to detect a moving target.

2. The passive radar according to claim 1, wherein the transmission chain (6) is configured to output the analogue signal representative of the estimation of the static contribution during the reception of the known sequences and wherein the moving target detection unit (4) is configured to use the digitised signal during the reception of the known sequences in the usage phase of the passive radar.

3. The passive radar according to one of claims 1 and 2, wherein the signal received from the transmitter is an OFDM signal.

4. The passive radar according to one of claims 1 to 3, wherein the coupler (7) is a directive coupler.

5. The passive radar according to one of claims 1 to 3, wherein a circulator is inserted between the reception antenna (2) and the coupler (7) to reduce the power of the analogue signal representative of the estimated static contribution received by the reception antenna.

6. The passive radar according to one of claims 1 to 5, wherein the reception antenna (2) is a directive scanning antenna.

7. The passive radar according to one of claims 1 to 5, wherein the reception antenna (2) receives signals transmitted by a plurality of non-cooperative transmitters (E1, E2).

8. The passive radar according to claim 7, wherein the reception antenna (2) receives the signals transmitted by the plurality of non-cooperative transmitters (E1, E2) in different frequency bands.

9. The passive radar according to one of claims 1 to 5, comprising a plurality of reception antennas (2) each associated with a reception chain (3), a digitised signal processing unit (5), a transmission chain (6) and a coupler (7).

10. A method of detection of a moving target using a passive radar comprising:

    - a reception antenna (2) configured to receive a signal comprising sequences known from the passive radar transmitted by a non-cooperative transmitter (10), the received signal comprising a static contribution related to propagation of the transmitted signal through a multi-path propagation channel and a dynamic contribution related to propagation of echoes of the transmitted signal coming from the moving target,
    - a reception chain (3) that includes a digital-analogue converter configured to output a digitised signal,
    - a moving target detection unit (4) making use of the digitised signal,

    the method being **characterized in that** it comprises the steps consisting of:

- during a calibration phase of the passive radar, synchronizing the received signal with the transmitted signal using the known sequences, determining an estimation of the multi-path propagation channel from the synchronized received signal and the known sequences and generating an estimation of the static contribution,
- forming an analogue signal representative of the estimation of the static contribution, and
- outputting to the reception chain:

  ◦ the received signal during the calibration phase of the passive radar,
  ◦ the received signal from which the analogue signal representative of the estimation of the static contribution is subtracted during a usage phase of the passive radar to detect the moving target.

# FIG. 1

# FIG. 2

EP 3 553 560 B1

FIG. 3

FIG. 4

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **H. BOLVARDI ; M. DERAKHTIAN ; A. SHEIKHI.** Dynamic Clutter Suppression and Multitarget Détection in a DVB-T-Based Passive Radar. *IEEE Transactions on Aerospace and Electronic Systems,* vol. 53 (4), 1812-1825
- **C. R. BERGER et al.** Signal processing for passive radar using OFDM waveforms. *J. Sel. Topics Signal Process.,* 2010, 226-238
- **M. MORELLI et al.** Synchronization techniques for orthogonal frequency division multiple access (OFDMA): A tutorial review. *Proc. IEEE,* Juillet 2007, vol. 95 (7), 1394-1427
- **M. K. OZDEMIR et al.** Channel estimation for wireless OFDM systems. *IEEE Communications Surveys & Tutorials,* 2007, vol. 9 (2), 18-48